(19) Europäisches Patentamt / European Patent Office / Office européen des brevets

(11) **EP 2 873 696 A1**

(12) **EUROPEAN PATENT APPLICATION**

(43) Date of publication:
**20.05.2015 Bulletin 2015/21**

(51) Int Cl.:
*C08K 5/42* (2006.01) *C08K 7/00* (2006.01)

(21) Application number: **14190628.9**

(22) Date of filing: **28.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.11.2013 KR 20130140400**
**30.07.2014 KR 20140097661**

(71) Applicant: **Samsung SDI Co., Ltd.**
**Gyeonggi-do 446-902 (KR)**

(72) Inventors:
- **Ra, Ha Na**
  **Gyeonggi-do (KR)**
- **Kim, Yong Tae**
  **Gyeonggi-do (KR)**
- **Bae, Su Hak**
  **Gyeonggi-do (KR)**
- **Ahn, Sung Hee**
  **Gyeonggi-do (KR)**
- **Lee, Ji Hye**
  **Gyeonggi-do (KR)**
- **Lee, Hyun Ho**
  **Gyeonggi-do (KR)**
- **Han, Hyun Joo**
  **Gyeonggi-do (KR)**

(74) Representative: **Michalski Hüttermann & Partner Patentanwälte mbB**
**Speditionstraße 21**
**40221 Düsseldorf (DE)**

(54) **Polycarbonate resin composition and molded article including the same**

(57) Disclosed is a polycarbonate resin composition which includes: a polycarbonate resin; inorganic fillers including flake and acicular fillers; and a sulfonate represented by Formula 1, wherein the sulfonate is present in an amount of ≥ 0.1 parts by weight to ≤ 1.0 part by weight based on 100 parts by weight of the polycarbonate resin. The polycarbonate resin composition exhibits excellent stiffness, excellent impact resistance, excellent property balance therebetween, and the like.

[Formula 1]

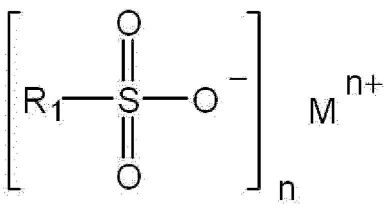

,

wherein $R_1$ is a $C_6$ to $C_{30}$ hydrocarbon group; M is an alkali or alkali earth metal; and n is 1 or 2.

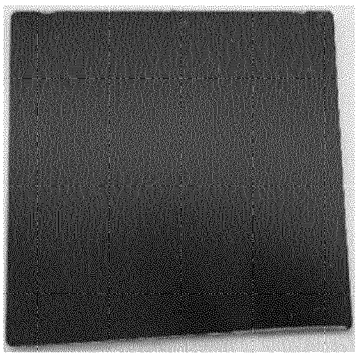

Fig. 1

EP 2 873 696 A1

## Description

### Cross-Reference to Related Application

This application claims priority to and the benefit of Korean Patent Application 10-2013-0140400, filed November 19, 2013, and Korean Patent Application No. 10-2014-0097661, filed July 30, 2014, the entire disclosure of each of which is incorporated herein by reference.

### Field of the Invention

The present invention relates to a polycarbonate resin composition and a molded article including the same. More particularly, the present invention relates to a polycarbonate resin composition, which exhibits excellent stiffness, impact resistance, and property balance therebetween, and a molded article including the same.

### Description of the Related Art

If a thermoplastic or thermosetting resin is blended with inorganic fillers such as glass fibers, silica, talc and the like, the resin can exhibit improved stiffness, such as tear strength, tensile strength, flexural strength, flexural modulus and the like, due to inherent properties of the inorganic fillers. Typically, blends of the thermoplastic resin such as polycarbonates with the inorganic fillers are used for molded articles requiring high stiffness, and widely used particularly for interior/exterior materials of automobiles and electronics.

However, when the thermoplastic resin is blended with the inorganic fillers, the thermoplastic resin can suffer from deterioration in fluidity (moldability) and deterioration in appearance, such as protrusion of the inorganic fillers from a surface of a molded article, and the like. To solve such problems, a material capable of controlling interface properties between the thermoplastic resin and the fillers are typically used. Such materials includes surfactants, coupling agents and the like, and the interface properties can be controlled in a manner in which one side of the material acts on the thermoplastic resin and the other side thereof acts on the fillers. If the interface properties are controlled, the resin can exhibit improved impact strength, fluidity, and the like.

US Patent Publication No. 2012-0245262 discloses a polycarbonate composition using a sulfonate and inorganic fillers to improve impact properties thereof. EP 1860145 discloses a polysulfone composition using fibrous (acicular) fillers and a sulfonate to improve impact properties thereof.

As such, although the thermoplastic resin can exhibit improved stiffness, impact resistance and the like using the inorganic fillers, the coupling agent and the like, an excess of inorganic fillers can cause the resin to be easily broken at room temperature and provides a difficulty in preventing deterioration in elongation, fluidity and the like. In addition, it is difficult to improve stiffness of the resin despite use of the coupling agent and a compatibilizer, unlike properties such as impact resistance, fluidity and the like.

Therefore, there is a need for a polycarbonate resin composition that exhibits excellent stiffness, excellent impact resistance, excellent property balance therebetween, and the like.

### Summary of the Invention

It is an aspect of the present invention to provide a polycarbonate resin composition which exhibits excellent stiffness, impact resistance, property balance therebetween and the like, and a molded article including the resin composition.

One aspect of the present invention relates to a polycarbonate resin composition. The polycarbonate resin composition includes: a polycarbonate resin; inorganic fillers including flake and acicular fillers; and a sulfonate represented by Formula 1, wherein the sulfonate is present in an amount of $\geq 0.1$ parts by weight to $\leq 1.0$ part by weight based on 100 parts by weight of the polycarbonate resin.

[Formula 1]

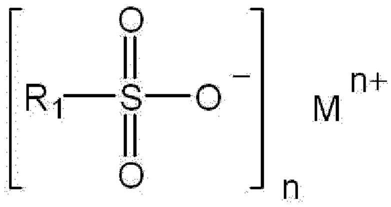

,

wherein $R_1$ is a $C_6$ to $C_{30}$ hydrocarbon group; M is an alkali or alkali earth metal; and n is 1 or 2.

In one embodiment, $R_1$ may be a $C_{12}$ to $C_{18}$ hydrocarbon group and M may be sodium (Na) or calcium (Ca).

In one embodiment, the flake fillers may include talc, mica, and mixtures thereof; and the acicular fillers may include wollastonite, whiskers, glass fibers, basalt fibers, and mixtures thereof.

In one embodiment, the flake fillers may have an average thickness from ≥ 30 nm to ≤ 700 nm, and/or an average particle size from ≥ 0.65 μm to ≤ 5.0 μm, and/or a ratio of average diameter to average thickness (diameter/thickness) from ≥ 4 to ≤ 30. The acicular fillers may have an average diameter (D) from ≥ 0.3 μm to ≤ 15 μm and/or an average length (L) from ≥ 3 μm to ≤ 3,000 μm, and/or a ratio of the average length to the average diameter (L/D) from ≥ 10 to ≤ 200.

In one embodiment, the inorganic fillers may be present in an amount of ≥ 1 part by weight to ≤ 80 parts by weight based on 100 parts by weight of the polycarbonate resin.

In one embodiment, the flake fillers may be present in an amount of ≥ 1% by weight (wt%) to ≤ 99 wt% based on a total amount of the inorganic fillers. The acicular fillers may be present in an amount of ≥ 1 wt% to ≤ 99 wt% based on the total amount of the inorganic fillers.

In one embodiment, a weight ratio of flake fillers to acicular fillers (flake fillers: acicular fillers) may range from ≥ 1:1 to ≤ 1:2.

In one embodiment, the polycarbonate resin composition may further include ≥ 0.1 parts by weight to ≤ 1.0 part by weight of a silane coupling agent based on 100 parts by weight of the polycarbonate resin.

In one embodiment, the silane coupling agent may be represented by Formula 2:

[Formula 2]

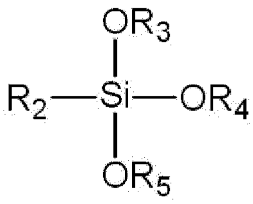

,

wherein $R_2$ is a $C_6$ to $C_{30}$ alkyl group, and $R_3$, $R_4$ and $R_5$ are each independently a $C_1$ to $C_5$ alkyl group.

In one embodiment, a content ratio of the sulfonate to the silane coupling agent (weight ratio, sulfonate:silane coupling agent) may range from ≥ 0.5:1 to ≤ 1.5:1.

In one embodiment, the polycarbonate resin composition may further include at least one of flame retardants, flame retardant aids, lubricants, plasticizers, heat stabilizers, anti-dripping agents, antioxidants, photostabilizers, pigments, and dyes.

In one embodiment, the polycarbonate resin composition may have an Izod impact strength from ≥ 5 kgf cm/cm to ≤ 16 kgf cm/cm, as measured on an 1/8" thick specimen in accordance with ASTM D256 and/or a falling dart impact (FDI) strength from ≥ 15 J to ≤ 60 J, as measured on an 3.2 mm thick specimen in accordance with the Dupont drop measurement method.

In one embodiment, the polycarbonate resin composition may have a deformation length of 16 mm or less, as measured on an injection-molded specimen having a size of 50 mm × 200 mm × 1 mm after a force of 10 kgf is applied to a center of the injection-molded specimen for 1 minute using the same analyzer as a flexural strength measuring apparatus in accordance with ASTM D790.

Another aspect of the present invention relates to a molded article formed from a polycarbonate resin composition.

In one embodiment, the molded article may be an electronics housing having a thickness from ≥ 0.4 mm to ≤ 3.0 mm.

**Detailed description of the Invention**

Hereinafter, embodiments of the present invention will be described in detail.

According to the present invention, a polycarbonate resin composition, which can exhibit improved stiffness and impact resistance, includes: a polycarbonate resin; inorganic fillers including flake and acicular fillers; and a sulfonate.

According to the present invention, the polycarbonate resin is a typical thermoplastic polycarbonate resin. For example, the polycarbonate resin may be an aromatic polycarbonate resin prepared by reacting diphenols (aromatic diol compounds) with a precursor such as phosgene, halogen formates, carbonic acid diesters, and the like.

Examples of diphenols may include 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, and the like, without being limited thereto. For example, diphenols may be 2,2-bis(4-hydroxyphenyl)propane, 2,2-bis(3,5-dichloro-4-hydroxyphenyl)propane, or 1,1-bis(4-hydroxyphenyl)cyclohexane, specifically 2,2-bis(4-hydroxyphenyl)propane, which is also referred to as bisphenol-A.

The polycarbonate resin may be a branched polycarbonate resin and may be prepared by, for example, reacting ≥ 0.05 mol% to ≤ 2 mol% of a polyfunctional compound containing tri- or higher functional groups, for example, tri- or higher-valent phenol groups, based on the total amount of diphenols used in polymerization.

The polycarbonate resin may be used in the form of a homo-polycarbonate resin, a co-polycarbonate resin, or blends thereof.

In addition, the polycarbonate resin may be partially or completely replaced by an aromatic polyester-carbonate resin obtained by polymerization in the presence of an ester precursor, for example, a bifunctional carboxylic acid.

The polycarbonate resin may have a weight average molecular weight (Mw) from ≥ 10,000 g/mol to ≤ 200,000 g/mol, for example, from ≥ 15,000 g/mol to ≤ 40,000 g/mol, without being limited thereto.

According to the present invention, the inorganic fillers include both the flake fillers and the acicular filler. The flake fillers may include talc, mica and mixtures thereof, for example, talc, without being limited thereto. The acicular fillers may include wollastonite, whiskers, glass fibers, basalt fibers and mixtures thereof, for example, wollastonite and whiskers, without being limited thereto.

In one embodiment, the whiskers may include potassium titanate whiskers, magnesium sulfate whiskers, calcium carbonate whiskers, aluminum borate whiskers, and the like. In addition, the glass fibers may include a glass fiber reinforcing agent in which fibers are formed by bundling glass filaments coated with a sizing agent, such as epoxy, urethane, and silane, without being limited thereto. Here, the sizing agent may be present in an amount of ≥ 0.05 parts by weight to ≤ 2.0 parts by weight based on 100 parts by weight of the glass filaments, without being limited thereto.

In one embodiment, the flake fillers have a thin film shape having a small z-axis length (thickness) as compared with a sectional area formed by x-axis and y-axis lengths. In addition, the flake fillers may have an average thickness from ≥ 30 nm to ≤ 700 nm, for example, from ≥ 30 nm to ≤ 300 nm, specifically from ≥ 32 nm to ≤ 270 nm; an average particle size from ≥ 0.65 μm to ≤ 5.0 μm, for example, from ≥ 0.65 μm to ≤ 2.7 μm, specifically from ≥ 0.8 μm to ≤ 2.5 μm; and a ratio of an average diameter (average x-axis and y-axis lengths) to the average thickness (z-axis length) (aspect ratio, diameter/thickness) from ≥ 4 to ≤ 30, for example, from ≥ 10 to ≤ 25. As the ratio of the average diameter to average thickness increases, stiffness of the polycarbonate resin composition improves.

For reference, the average particle size of the flake fillers refers to a median value of particle size distribution measured by X-ray transmission. Specifically, the particle size distribution of the flake fillers are obtained by X-ray transmission of sinking particles, followed by calculating the median value, thereby obtaining the average particle size.

In addition, the acicular fillers have an acicular (fibrous) shape, and may have an average diameter (D) from ≥ 0.3 μm to ≤ 15 μm, for example, from ≥ 0.5 μm to ≤ 13 μm, an average length (L) from ≥ 3 μm to ≤ 3,000 μm, for example, from ≥ 5 μm to ≤ 2,600 μm, and a ratio of the average length to the average diameter (aspect ratio, L/D) from ≥ 10 to ≤ 200, for example, from ≥ 20 to ≤ 100.

Within this range, the polycarbonate resin composition can exhibit shrinkage stability and high stiffness due to mixing of the flake fillers and the acicular fillers.

In one embodiment, the flake fillers may be present in an amount of ≥ 1 wt% to ≤ 99 wt%, for example, ≥ 10 wt% to ≤ 70 wt%, specifically ≥ 15 wt% to ≤ 60 wt% based on the total amount of the inorganic fillers. In addition, the acicular fillers may be present in an amount of ≥ 1 wt% to ≤ 99 wt%, for example, ≥ 30 wt% to ≤ 90 wt%, specifically ≥ 40 wt% to ≤ 90 wt% based on a total amount of the inorganic fillers. Within this range, the polycarbonate resin composition can exhibit excellent impact resistance and stiffness.

In one embodiment, a weight ratio of flake fillers to acicular fillers (flake fillers:acicular fillers) may range from ≥ 1:1 to ≤ 1:2, for example, from ≥ 1:1.5 to ≤ 1:1.9. Within this range, the polycarbonate resin composition can exhibit superior impact resistance and stiffness.

As such, the mixed flake and acicular fillers may be identified through analysis of the polycarbonate resin composition (pellet) by transmission electron microscopy and scanning electron microscopy. When a pellet is cut and observed using a transmission electron microscope, various shapes of the flake fillers, such as a circular shape, an

elliptical shape, and a bar shape, can be identified. In addition, when a tensile specimen is cut and observed using a scanning electron microscope, the presence of the acicular fillers, which have a relatively high length/diameter ratio, can be identified.

The inorganic fillers may be present in an amount of ≥ 1 part by weight to ≤ 80 parts by weight, for example, ≥ 5 parts by weight to ≤ 50 parts by weight, specifically ≥ 10 parts by weight to ≤ 40 parts by weight, based on 100 parts by weight of the polycarbonate resin. Within this range, the polycarbonate resin composition can exhibit excellent impact resistance and stiffness without deterioration in fluidity thereof.

According to the present invention, the sulfonate serves to control interface properties between the inorganic fillers and the resin and disperse the fillers in the resin, and may be represented by Formula 1:

[Formula 1]

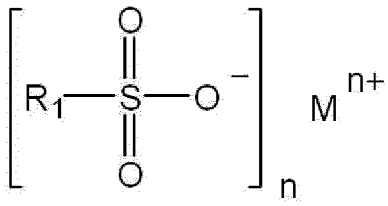

,

wherein $R_1$ may be a $C_6$ to $C_{30}$ hydrocarbon group, for example, a $C_6$ to $C_{20}$ alkyl group or a $C_7$ to $C_{30}$ arylalkyl group, specifically a $C_{12}$ to $C_{18}$ hydrocarbon group (alkyl group, arylalkyl group, and the like); M is an alkali or alkali earth metal element, for example, sodium (Na), magnesium (Mg) or calcium (Ca), specifically sodium (Na) or calcium (Ca); and n is 1 or 2, for example, 1 when M is an alkali metal, and 2 when M is an alkali earth metal.

Examples of the sulfonate may include sodium dodecylbenzenesulfonate, calcium dodecylbenzenesulfonate, and the like, and mixtures thereof, without being limited thereto.

The sulfonate may be present in an amount of ≥ 0.1 parts by weight to ≤ 1.0 part by weight, for example, ≥ 0.3 parts by weight to ≤ 0.7 parts by weight, based on 100 parts by weight of the polycarbonate resin. Within this range, the polycarbonate resin composition can exhibit excellent impact resistance and stiffness, and gas generation in a gate surrounding portion upon injection molding of the composition can be reduced or prevented, thereby improving appearance of a specimen.

According to the present invention, the polycarbonate resin composition may further include a silane coupling agent to improve interface adhesion between the polycarbonate resin and the inorganic fillers and to improve stiffness thereof. The silane coupling agent may be a silane coupling agent used for typical polycarbonate resin compositions. For example, the silane coupling agent may be represented by Formula 2:

[Formula 2]

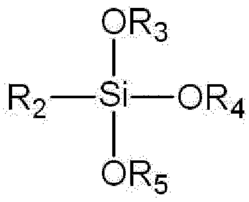

,

wherein $R_2$ is a $C_6$ to $C_{30}$ alkyl group, and $R_3$, $R_4$ and $R_5$ are each independently a $C_1$ to $C_5$ alkyl group.

Examples of the silane coupling agent may include decyltrimethoxysilane, heptyltrimethoxysilane, heptyltriethoxysilane, octyltrimethoxysilane, octyltriethoxysilane, dodecyltrimethoxysilane, dodecyltriethoxysilane, hexadecyltrimethoxysilane, hexadecyltriethoxysilane, octadecyltrimethoxysilane, octadecyltriethoxysilane, and the like, without being limited thereto.

The silane coupling agent may be present in an amount of ≥ 0.1 parts by weight to ≤ 1.0 part by weight, for example, ≥ 0.3 parts by weight to ≤ 0.7 parts by weight, based on 100 parts by weight of the polycarbonate resin. Within this range, the polycarbonate resin composition has improved adhesion, stiffness and the like, and can exhibit excellent impact resistance and stiffness.

In one embodiment, a content ratio of the sulfonate to the silane coupling agent (weight ratio, sulfonate: silane coupling agent) may range from ≥ 0.5:1 to ≤ 1.5:1, for example, from ≥ 0.8:1 to ≤ 1.2:1, specifically from ≥ 0.9:1 to ≤ 1.1:1. Within this range, gas generation in the gate surrounding portion upon injection molding of the composition can

be further reduced or prevented, and appearance of the specimen can be improved.

According to the present invention, the polycarbonate resin composition may further include additives, such as flame retardants, flame retardant aids, lubricants, plasticizers, heat stabilizers, anti-dripping agents, antioxidants (oxidation stabilizers), photostabilizers, pigments, dyes, and the like, as needed. These additives may be used alone or in combination thereof. The additives may be any additive used for typical polycarbonate resin compositions. Specifically, the additives may include phosphorus flame retardants such as sodium pyrophosphate, resorcinol bis(di-2,6-dimethylphenyl)phosphate, and the like; antioxidants such as hindered phenol compounds; and mixtures thereof, without being limited thereto.

In one embodiment, the additives may be present in an amount of ≥ 0.1 parts by weight to ≤ 10 parts by weight based on 100 parts by weight of the polycarbonate resin, without being limited thereto.

According to the present invention, the polycarbonate resin composition may be prepared in pellet form by mixing the above components, followed by melt extrusion at ≥ 200°C to ≤ 280°C, for example, ≥ 250°C to ≤ 260°C, using a typical twin-screw extruder. The pellets may be formed into various molded articles through various molding methods, such as injection molding, extrusion, vacuum molding, cast molding, and the like. These molding methods are well known by those of ordinary skill in the art.

In one embodiment, the polycarbonate resin composition according to the present invention may have an Izod impact strength from ≥ 5 kgf cm/cm to ≤ 16 kgf cm/cm, for example, from ≥ 7 kgf cm/cm to ≤ 12 kgf cm/cm, as measured on an 1/8" thick specimen in accordance with ASTM D256.

The polycarbonate resin composition may have a falling dart impact (FDI) strength (crack generation energy) from ≥ 15 J to ≤ 60 J, for example, from ≥ 25 J to ≤ 50 J, as measured on an 1 mm thick specimen (10 cm × 10 cm × 1 mm) using an 2 kg dart in accordance with the Dupont drop measurement method, in which a maximum height not generating a crack is measured by adjusting a height of the dart, followed by converting the maximum height into potential energy. Here, the maximum height not generating a crack is obtained in such a manner that a dart having a certain weight is dropped onto the 1 mm thick specimen from a varying height, followed by observing generation of cracks in the specimen by the naked eye.

In addition, to measure stiffness of the polycarbonate resin composition, a pressure deformation test is performed. The pressure deformation test refers to a test in which a force of 10 kgf is applied to a center of an 1 mm thick injection-molded specimen (50 mm × 200 mm × 1 mm) for 1 minute using the same analyzer as a flexural strength measuring apparatus in accordance with ASTM D790, followed by measuring a length change of the specimen. The polycarbonate resin composition may have a deformation length of 16 mm or less, for example, from ≥ 12 mm to ≤ 16 mm, specifically from ≥ 14 mm to ≤ 15.6 mm, as measured through the pressure deformation test. Within this range, the polycarbonate resin composition and a molded article thereof can exhibit excellent stiffness.

Further, to measure flexural properties of the polycarbonate resin composition, that is, anisotropy generated in an injection-molded article due to change in width (perpendicular direction to injection molding) and length (injection molding direction) of the molded article upon injection molding, a specimen having a width (perpendicular direction to injection molding) × length (injection molding direction) × thickness of 5 cm × 20 cm × 1 mm is subjected to injection molding, and left for 24 hours, thereby calculating a ratio of length/width after shrinkage. The polycarbonate resin composition may have a ratio of length/width after shrinkage from ≥ 400.0 to ≤ 405.5, for example, from ≥ 401.0 to ≤ 405.3. Here, when the specimen exhibits the same shrinkage in the longitudinal and transverse directions, the ratio of length/width is 400 corresponding to the ratio of length/width of the initial specimen, and as the shrinkage in the transverse direction is further increased as compared with the shrinkage in the longitudinal direction, that is, as anisotropy is increased, the polycarbonate resin has a greater ratio of length/width.

<Expression 1>

Ratio of length/width after shrinkage = (Length after shrinkage/Width after shrinkage)×100

According to the present invention, a molded article is formed from the polycarbonate resin composition through various molding methods. Since the molded article exhibits excellent stiffness, excellent impact resistance, excellent property balance therebetween, and the like, the molded article is useful for interior/exterior materials and the like of electronics, automobiles and the like requiring both high stiffness and high impact properties, for example, extremely useful for electronics housings (thin exterior materials) having a thickness from ≥ 0.4 mm to ≤ 3.0 mm.

Hereinafter, the present invention will be described in more detail with reference to some examples. It should be understood that these examples are provided for illustration only and are not to be construed in any way as limiting the present invention. A description of details apparent to those skilled in the art will be omitted for clarity.

## EXAMPLES

Details of components used in Examples and Comparative Examples are as follows:

(A) Polycarbonate resin
Bisphenol-A polycarbonate (SC-1190G, Cheil Industries Inc., melt flow index (MI, measured at 300°C under a load of 1.2 kg in accordance with ISO 1133): 20 g/10min) was used.
(B) Inorganic filler

(B1) Flake filler: Talc (KC-3000, KOCH Co., Ltd.) was used.
(B2) Flake filler: Mica (325-HK, Imerys Co., Ltd.) was used.
(B3) Acicular filler: Wollastonite (4W, NYCO Co., Ltd.) was used.
(B4) Acicular filler: Potassium titanate whisker (TISMO_N, Otsuka Chemical Co., Ltd.) was used.

(C) Sulfonate

(C1) Sodium dodecylbenzenesulfonate (D0990, TCI Co., Ltd.) was used.
(C2) Potassium diphenylsulfonesulfonate (KSS, SLOSS Co., Ltd.) was used.

(D) Silane coupling agent
Decyltrimethoxysilane (KBM3103C, Shin-Etsu Chemical Co., Ltd.) was used.

**Examples 1 to 18 and Comparative Examples 1 to 17**

The components were added in amounts as listed in Tables 2 to 7, respectively, followed by extrusion at 200°C to 280°C, thereby preparing pellets. Here, acicular fillers were introduced into a side feeder and the others were introduced into a main feeder. Extrusion was performed using a twin-screw extruder having L/D=36 and a diameter of 45 mm. The prepared pellets were dried at 80°C to 100°C for 4 hours or more, followed by injection molding in a 6 oz injection machine (molding temperature: 280°C, mold temperature: 60°C), thereby preparing specimens. Each of the prepared specimens was evaluated as to the following properties. Results are shown in Tables 2 to 7.

Evaluation of properties

(1) Izod impact strength (unit: kgf cm/cm): Izod impact strength was measured on a 1/8" thick notched Izod specimen in accordance with ASTM D256.
(2) Falling dart impact (FDI) strength (unit: J): FDI strength was measured by measuring a height for generating a crack in a 1.0 mm thick specimen (10 cm×10 cm×1 mm) using a 2 kg dart in accordance with the Dupont drop measurement method, followed by converting the height into energy.
(3) Gas generation in gate surrounding portion: The pellets prepared in each of Examples and Comparative Examples were dried in an oven at 100°C for 4 hours, followed by injection molding into a 1.0 mm thick specimen (10 cm×10 cm×1 mm) at an injection molding temperature of 280°C and a mold temperature of 60°C. Next, the injection-molded specimen was observed to evaluate a degree of gas generation in a gate surrounding portion. Evaluation criteria of gas generation in the gate surrounding portion are shown in Table 1 (No gas generation: □, Gas generation: O, Severe gas generation: X) and the accompanying Figures 1 to 3.

Table 1

| ◎ | ○ | X |
|---|---|---|
| Fig.1 | Fig.2 | Fig. 3 |

(4) Pressure deformation: Using the same analyzer as a flexural strength measuring apparatus in accordance with ASTM D790, a force of 10 kgf was applied to a center of a 1 mm thick injection-molded specimen (50 mm×200 mm×1 mm), followed by measuring a length change of the specimen.
(5) Anisotropy: To evaluate anisotropy (flexural properties), a specimen having a width (perpendicular direction to injection molding)×length (injection molding direction)×thickness of 50 mm×200 mm×1 mm was subjected to injection molding, and left for 24 hours, thereby calculating a ratio of length/width after shrinkage according to Expression 1:

Ratio of length/width after shrinkage=(Length after shrinkage/Width after shrinkage)×100.

Table 2

| | | Example | | | | | |
|---|---|---|---|---|---|---|---|
| | | 1 | 2 | 3 | 4 | 5 | 6 |
| (A) (parts by weight) | | 100 | 100 | 100 | 100 | 100 | 100 |
| (B) (parts by weight) | (B1) | 8 | 8 | 8 | 8 | - | - |
| | (B2) | - | - | - | - | 8 | 8 |
| | (B3) | 15 | 15 | - | - | 15 | 15 |
| | (B4) | - | - | 15 | 15 | - | - |
| (C1) (parts by weight) | | 0.1 | 0.5 | 0.1 | 0.5 | 0.1 | 0.5 |
| Izod impact strength | | 5.5 | 7.0 | 5.0 | 7.0 | 6.0 | 7.5 |
| FDI strength | | 35 | 40 | 38 | 45 | 40 | 43 |
| Gas generation | | ◎ | ◎ | ◎ | ◎ | ◎ | ◎ |
| Pressure deformation length (mm) | | 15.55 | 15.50 | 14.95 | 14.90 | 15.00 | 15.00 |
| Ratio of length/width after shrinkage | | 405.25 | 405.2 | 405.14 | 405.14 | 405.27 | 405.2 |

Table 3

| | | Example | | | | | |
|---|---|---|---|---|---|---|---|
| | | 7 | 8 | 9 | 10 | 11 | 12 |
| (A) (parts by weight) | | 100 | 100 | 100 | 100 | 100 | 100 |
| (B) (parts by weight) | (B1) | 8 | 8 | 8 | 8 | - | - |
| | (B2) | - | - | - | - | 8 | 8 |
| | (B3) | 15 | 15 | - | - | 15 | 15 |
| | (B4) | - | - | 15 | 15 | - | - |
| (C1) (parts by weight) | | 0.15 | 0.25 | 0.15 | 0.25 | 0.15 | 0.25 |
| (D) (parts by weight) | | 0.15 | 0.25 | 0.15 | 0.25 | 0.15 | 0.25 |
| Izod impact strength | | 6.0 | 7.5 | 5.3 | 8.0 | 6.7 | 8.0 |
| FDI strength | | 42 | 45 | 43 | 48 | 45 | 48 |
| Gas generation | | ◎ | ◎ | ◎ | ◎ | ◎ | ◎ |
| Pressure deformation length (mm) | | 15.53 | 15.51 | 14.45 | 14.78 | 14.80 | 14.80 |
| Ratio of length/width after shrinkage | | 405.20 | 405.15 | 405.15 | 405.12 | 405.12 | 405.17 |

Table 4

| | Example | | | | | |
|---|---|---|---|---|---|---|
| | 13 | 14 | 15 | 16 | 17 | 18 |
| (A) (parts by weight) | 100 | 100 | 100 | 100 | 100 | 100 |

(continued)

| | | Example | | | | | |
|---|---|---|---|---|---|---|---|
| | | 13 | 14 | 15 | 16 | 17 | 18 |
| (B) (parts by weight) | (B1) | 13 | 13 | 13 | 13 | - | - |
| | (B2) | - | - | - | - | 13 | 13 |
| | (B3) | 20 | 20 | - | - | 20 | 20 |
| | (B4) | - | - | 20 | 20 | - | - |
| (C1) (parts by weight) | | 0.15 | 0.25 | 0.15 | 0.25 | 0.15 | 0.25 |
| (D) (parts by weight) | | 0.15 | 0.25 | 0.15 | 0.25 | 0.15 | 0.25 |
| Izod impact strength | | 7.6 | 9.5 | 7 | 9 | 8.1 | 11 |
| FDI strength | | 38 | 43 | 40 | 45 | 42 | 38 |
| Gas generation | | ◎ | ◎ | ◎ | ◎ | ◎ | ◎ |
| Pressure deformation length (mm) | | 14.36 | 14.35 | 14.11 | 14.10 | 14.20 | 14.21 |
| Ratio of length/width after shrinkage | | 405.15 | 405.14 | 405.14 | 405.12 | 405.15 | 405.14 |

Table 5

| | | Comparative Example | | | | | | |
|---|---|---|---|---|---|---|---|---|
| | | 1 | 2 | 3 | 4 | 5 | 6 | 7 |
| | | | | | | | | |
| (A) (parts by weight) | | 100 | 100 | 100 | 100 | 100 | 100 | 100 |
| (B) (parts by weight) | (B1) | 8 | 13 | 8 | 13 | 13 | 13 | 13 |
| | (B3) | 15 | 20 | 15 | 20 | 20 | 20 | 20 |
| (C1) (parts by weight) | | - | - | - | - | - | 0.04 | 0.08 |
| (D) (parts by weight) | | - | - | 0.1 | 0.1 | 0.5 | 0.04 | 0.08 |
| Izod impact strength | | 4.0 | 4.8 | 4.5 | 5.2 | 6.0 | 4.5 | 4.3 |
| FDI strength | | 1 | 1 | 9 | 5 | 10 | 1 | 1 |
| Gas generation | | X | X | X | X | X | ○ | ○ |

Table 6

| | | Comparative Example | | | | | |
|---|---|---|---|---|---|---|---|
| | | 8 | 9 | 10 | 11 | 12 | 13 |
| (A) (parts by weight) | | 100 | 100 | 100 | 100 | 100 | 100 |
| (B) (parts by weight) | (B1) | 33 | 33 | 33 | - | - | - |
| | (B3) | - | - | - | 33 | 33 | 33 |
| (C1) (parts by weight) | | - | 0.15 | 0.25 | - | 0.15 | 0.25 |
| (D) (parts by weight) | | - | 0.15 | 0.25 | - | 0.15 | 0.25 |
| Izod impact strength | | 1.5 | 3 | 3.5 | 5 | 7 | 9 |
| FDI strength | | 1 | 17 | 20 | 1 | 15 | 16 |
| Gas generation | | X | ○ | ◎ | X | ○ | ◎ |

(continued)

| | Comparative Example | | | | | |
|---|---|---|---|---|---|---|
| | 8 | 9 | 10 | 11 | 12 | 13 |
| Pressure deformation length (mm) | 16.20 | 16.11 | 16.25 | 16.31 | 16.31 | 16.35 |
| Ratio of length/width after shrinkage | 405.10 | 405.10 | 405.09 | 405.71 | 405.75 | 405.74 |

Table 7

| | | Comparative Example | | | |
|---|---|---|---|---|---|
| | | 14 | 15 | 16 | 17 |
| (A) (parts by weight) | | 100 | 100 | 100 | 100 |
| (B) (parts by weight) | (B1) | 13 | 13 | 13 | 13 |
| | (B3) | 18 | 18 | 18 | 18 |
| (C2) (parts by weight) | | 0.04 | 0.15 | 0.25 | 0.5 |
| Izod impact strength | | 4.0 | 3.5 | 3.0 | 3.0 |
| FDI strength | | 7 | 8 | 10 | 11 |
| Gas generation | | ○ | X | X | X |

From the results, it can be seen that the polycarbonate resin compositions according to the present invention exhibited excellent properties in terms of impact strength (impact resistance), stiffness (pressure deformation), and gas generation.

Conversely, it can be seen that the polycarbonate resin compositions, which did not include the sulfonate and/or the silane coupling agent (Comparative Examples 1 to 5) or included the sulfonate in an amount of less than the amount according to the present invention (Comparative Examples 6 to 7), exhibited significantly deterioration in impact resistance (particularly FDI strength) and suffered from severe gas generation in the gate surrounding portion. In addition, it can be seen that the polycarbonate resin compositions of Comparative Examples 8 to 10, which included the flake fillers alone, exhibited deterioration in stiffness and Izod impact strength, and that the polycarbonate resin composition, which did not include the sulfonate and the silane coupling agent, particularly suffered from severe gas generation in the gate surrounding portion and exhibited further deterioration in Izod impact strength. It can be seen that the polycarbonate resin compositions of Comparative Examples 11 to 13, which included the acicular fillers alone, exhibited deteriorated impact resistance and also exhibited deterioration in stiffness (pressure deformation) with increasing anisotropy (ratio of length/width after shrinkage).

In addition, it can be seen that the polycarbonate resin compositions including (C2) potassium diphenylsulfonesulfonate, which is generally used as a flame retardant, instead of the sulfonate according to the present invention (Comparative Examples 14 to 17) suffered from deterioration in appearance and the like due to gas generation in the gate surrounding portion upon injection molding, and exhibited deterioration in impact resistance and/or stiffness and thus low property balance therebetween.

It should be understood that various modifications, changes, alterations, and equivalent embodiments can be made by those skilled in the art without departing from the spirit and scope of the invention.

## Claims

**1.** A polycarbonate resin composition comprising:

a polycarbonate resin;
inorganic fillers comprising flake and acicular fillers; and
a sulfonate represented by Formula 1,
wherein the sulfonate is present in an amount of ≥ 0.1 parts by weight to ≤ 1.0 part by weight based on 100 parts by weight of the polycarbonate resin.

[Formula 1]

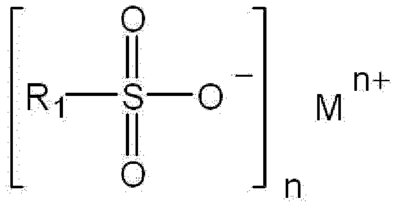

,

wherein $R_1$ is a $C_6$ to $C_{30}$ hydrocarbon group; M is an alkali or alkali earth metal; and n is 1 or 2.

**2.** The polycarbonate resin composition according to claim 1, wherein $R_1$ is a $C_{12}$ to $C_{18}$ hydrocarbon group and M is sodium (Na) or calcium (Ca).

**3.** The polycarbonate resin composition according to claim 1 or 2, wherein the flake fillers comprise talc, mica, and mixtures thereof; and the acicular fillers comprise wollastonite, whiskers, glass fibers, basalt fibers, and mixtures thereof.

**4.** The polycarbonate resin composition according to any of the claims 1 to 3, wherein the flake fillers have an average thickness from ≥ 30 nm to ≤ 700 nm and/or an average particle size from ≥ 0.65 μm to ≤ 5.0 μm and/or a ratio of an average diameter to the average thickness (diameter/thickness) from ≥ 4 to ≤ 30; and/or the acicular fillers have an average diameter (D) from ≥ 0.3 μm to ≤ 15 μm, an average length (L) from ≥ 3 μm to ≤ 3,000 μm, and a ratio of the average length to the average diameter (L/D) from ≥ 10 to ≤ 200.

**5.** The polycarbonate resin composition according to any of the claims 1 to 4, wherein the inorganic fillers are present in an amount of ≥ 1 part by weight to ≤ 80 parts by weight based on 100 parts by weight of the polycarbonate resin.

**6.** The polycarbonate resin composition according to any of the claims 1 to 5, wherein the flake fillers are present in an amount of ≥ 1 wt% to ≤ 99 wt% based on a total amount of the inorganic fillers, and the acicular fillers are present in an amount of ≥ 1 wt% to ≤ 99 wt% based on the total amount of the inorganic fillers.

**7.** The polycarbonate resin composition according to any of the claims 1 to 6, wherein a weight ratio of flake fillers to acicular fillers (flake fillers:acicular fillers) ranges from≥ 1:1 to ≤ 1:2.

**8.** The polycarbonate resin composition according to any of the claims 1 to 7, further comprising:

≥ 0.1 parts by weight to ≤ 1.0 part by weight of a silane coupling agent based on 100 parts by weight of the polycarbonate resin.

**9.** The polycarbonate resin composition according to any of the claims 1 to 8, wherein the silane coupling agent is represented by Formula 2:

[Formula 2]

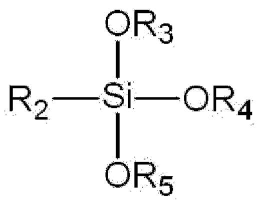

,

wherein $R_2$ is a $C_6$ to $C_{30}$ alkyl group, and $R_3$, $R_4$ and $R_5$ are each independently a $C_1$ to $C_5$ alkyl group.

**10.** The polycarbonate resin composition according to any of the claims 1 to 9, wherein a content ratio of the sulfonate to the silane coupling agent (weight ratio, sulfonate:silane coupling agent) ranges from ≥ 0.5:1 to ≤ 1.5:1.

**11.** The polycarbonate resin composition according to any of the claims 1 to 10, further comprising:

at least one of flame retardants, flame retardant aids, lubricants, plasticizers, heat stabilizers, anti-dripping agents, antioxidants, photostabilizers, pigments, and dyes.

**12.** The polycarbonate resin composition according to any of the claims 1 to 11, wherein the polycarbonate resin composition has an Izod impact strength from ≥ 5 kgf cm/cm to ≤ 16 kgf cm/cm, as measured on an 1/8" thick specimen in accordance with ASTM D256, and/or a falling dart impact (FDI) strength from ≥ 15 J to ≤ 60 J, as measured on an 3.2 mm thick specimen in accordance with the Dupont drop measurement method.

**13.** The polycarbonate resin composition according to any of the claims 1 to 12, wherein the polycarbonate resin composition has a deformation length of 16 mm or less, as measured on an injection-molded specimen having a size of 50 mm × 200 mm × 1 mm after a force of 10 kgf is applied to a center of the injection-molded specimen for 1 minute using the same analyzer as a flexural strength measuring apparatus in accordance with ASTM D790.

**14.** A molded article formed from the polycarbonate resin composition according to any one of claims 1 to 13.

**15.** The molded article according to claim 14, wherein the molded article is an electronics housing having a thickness from ≥ 0.4 mm to ≤ 3.0 mm.

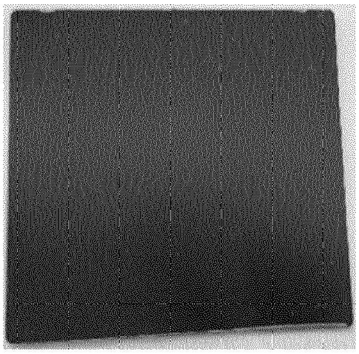

Fig. 1

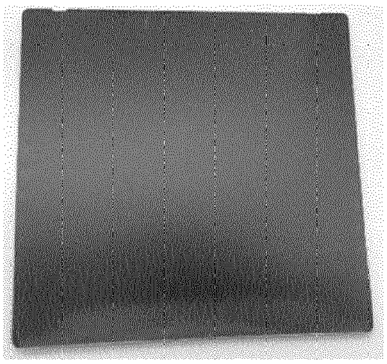

Fig. 2

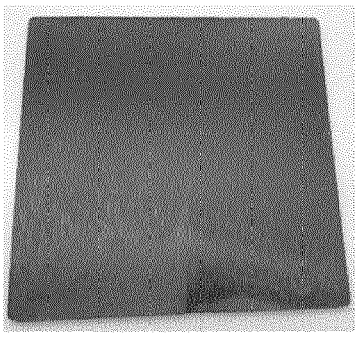

Fig. 3

Europäisches Patentamt
European Patent Office
Office européen des brevets

# EUROPEAN SEARCH REPORT

Application Number
EP 14 19 0628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/131241 A1 (VAN DE GRAMPEL ROBERT [NL] ET AL) 23 May 2013 (2013-05-23)<br>* example 46; table 11 *<br>* claim 22 * | 1-15 | INV.<br>C08K5/42<br>C08K7/00 |
| X | WO 2009/095825 A2 (SABIC INNOVATIVE PLASTICS IP [NL]; SHEN GARY [CN]; PAN LILY [CN]) 6 August 2009 (2009-08-06)<br>* examples 1-19; tables 3-5 * | 1-15 | |
| A,D | US 2012/245262 A1 (HAO NING [CN] ET AL) 27 September 2012 (2012-09-27)<br>* claims 1-28 *<br>* Examples * | 1-15 | |

TECHNICAL FIELDS SEARCHED (IPC)

C08K

The present search report has been drawn up for all claims

| Place of search | Date of completion of the search | Examiner |
|---|---|---|
| The Hague | 25 March 2015 | Pouilley, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

## ANNEX TO THE EUROPEAN SEARCH REPORT ON EUROPEAN PATENT APPLICATION NO. EP 14 19 0628

This annex lists the patent family members relating to the patent documents cited in the above-mentioned European search report. The members are as contained in the European Patent Office EDP file on
The European Patent Office is in no way liable for these particulars which are merely given for the purpose of information.

25-03-2015

| Patent document cited in search report | Publication date | Patent family member(s) | Publication date |
|---|---|---|---|
| US 2013131241 A1 | 23-05-2013 | CN 103946308 A | 23-07-2014 |
| | | EP 2782963 A1 | 01-10-2014 |
| | | US 2013131241 A1 | 23-05-2013 |
| | | WO 2013076636 A1 | 30-05-2013 |
| WO 2009095825 A2 | 06-08-2009 | CN 101981085 A | 23-02-2011 |
| | | EP 2238196 A2 | 13-10-2010 |
| | | US 2009197999 A1 | 06-08-2009 |
| | | WO 2009095825 A2 | 06-08-2009 |
| US 2012245262 A1 | 27-09-2012 | CN 103443178 A | 11-12-2013 |
| | | EP 2688945 A1 | 29-01-2014 |
| | | KR 20140022835 A | 25-02-2014 |
| | | US 2012245262 A1 | 27-09-2012 |
| | | WO 2012129276 A1 | 27-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020130140400
- KR 1020140097661
- US 20120245262 A
- EP 1860145 A